# EUROPEAN PATENT SPECIFICATION

(11) **EP 3 192 997 B1**
(45) Date of publication and mention of the grant of the patent: **07.08.2019**
(21) Application number: 16151119.1
(22) Date of filing: 13.01.2016
(51) Int. Cl.: F02D 41/14, F02D 41/40, F02D 35/02, F02D 41/00, F02D 19/06, F02D 13/02

(54) **METHOD AND SYSTEM FOR OPTIMIZING THE FUEL CONSUMPTION OF A TWO-STROKE TURBOCHARGED SLOW RUNNING DIESEL ENGINE**
VERFAHREN UND SYSTEM ZUR OPTIMIERUNG DES KRAFTSTOFFVERBRAUCHS EINES TURBOLGELADENEN LANGSAMLAUFENDEN ZWEITAKT-DIESELMOTORS
PROCÉDÉ ET SYSTÈME D'OPTIMISATION DE LA CONSOMMATION DE CARBURANT D'UN MOTEUR DIESEL DEUX TEMPS À ROTATION LENTE TURBOCOMPRESSÉE

(43) Date of publication of application: 19.07.2017
(73) Proprietor: Winterthur Gas & Diesel Ltd., 8401 Winterthur (CH)
(72) Inventor: Akrour, Matthieu, 4051 Basel (CH)
(74) Representative: Hepp Wenger Ryffel AG

(56) References cited:
- EP-A2- 2 808 522
- WO-A1-2013/026517
- US-A1- 2008 264 036
- US-A1- 2014 109 868
- US-B1- 7 155 334
- US-B1- 8 359 829

## Description

The invention relates to a method and a system for optimizing the fuel consumption a slow running diesel engine with a plurality of cylinders according to the preamble of the independent claims. The engine is preferably a two-stroke turbocharged diesel engine

Document WO 2013/026517 A1 relates to a marine engine wherein fuel consumption is determined from a CO2 measurement in the exhaust.

Two-stroke turbocharged slow running diesel engines are mainly used in marine applications and are therefore well known in the art.

It is important that the engine is operated at its optimum in order to decrease the fuel consumption. However, since heavy fuel oil is used as a main fuel (besides gas in dual fuel engines) and its composition may vary considerably, it is not possible to operate the engine at its optimum without having to first determine the fuel consumption during operation. Furthermore, fuel consumption may be influenced by other environmental factors like air temperature, humidity, pressure etc.

Since measuring the fuel consumption usually takes a while and may not be accurate enough, because it is determined as a mean value over a period of time and not all parameters may be kept constant over this period of time, there is a need for a method and a system as cited above that solves the problems of the prior art and in particular may allow to optimize the fuel consumption without the need to first directly determine the fuel consumption during operation.

This problem is solved by a method and a system according to the characterizing part of the independent claims.

It has been found out that the thermodynamic optimum for a fixed firing pressure at a constant engine load correlates to a minimum of one or more exhaust parameters.

This is in particular not dependent from the composition of the used fuel. In particular, there is a correlation between carbon monoxide content of the exhaust and the fuel consumption.

During operation of the engine and when performing the method, at least one exhaust content parameter is measured. The measured parameter(s) may be one of Carbon Monoxide (CO) and/or Carbon Dioxide (CO₂) and/or Dioxygen (O₂) and/or Hydrocarbon (HC) and/or Total Hydrocarbon (THC) and/or Nitrogen Oxide (NO_{X}) and/or Sulphur Oxide (SO_{X}).

The measurement of at least one exhaust content parameter is preferably performed continuously, with the parameter(s) being continuously monitored. Alternatively, the parameter(s) may be collected at defined intervals.

The method for optimizing the fuel consumption of a two-stroke turbocharged slow running diesel engine with a plurality of cylinders according to the present invention includes further the following steps:
A comparing step a) is performed, wherein the measured parameter or the measured parameters are then compared with reference values.

Preferably the reference values are values of a characteristic curve.

The reference values set the fuel consumption, preferably the Brake Specific Fuel Consumption (BSFC expressed in g/kWh) and the exhaust content parameter (expressed in ppm) for different compression pressures into relationship.

The compression pressure is preferably determined with a pressure sensor for each cylinder. In particular, the compression pressure is extrapolated using two pressure values determined before the top dead centre (TDC) and after the exhaust valve closing, e.g. at 290° CA and 345° CA.

A deviation D from an optimal value of the reference values is then determined.

The optimal value is preferably a minimum of the fuel consumption, more preferred a minimum of the BSFC.

The deviation may be a qualitative deviation, i.e. it is only determined if the reference value and/or the measured parameter is higher or lower than the optimal value, or a quantitative deviation, i.e. the magnitude of the deviation is further determined.

A changing step b) is (then) performed, wherein the compression pressure is changed.

Then, a determining step c) is performed, wherein a difference ΔEP is determined between the determined deviation D before and after the changing step b).

Then a re-triggering step d) is performed, wherein the changing step b) is re-triggered depending on the difference ΔEP determined in the determining step c).

The method can therefore be looped at least until an optimum value, in particular a minimum value of the exhaust content parameter(s) is achieved.

In particular, if after the changing step b) the determined deviation D is lower than before the changing step b), the same changing step b) as in the preceding loop is performed, meaning i.e. that if the compression pressure was increased in the first changing step b), the compression pressure is increased again in the second changing step b). At the contrary, if after the changing step b) the determined deviation D is higher than before the changing step b), an opposite changing step b) as in the preceding loop is performed, meaning i.e. that if the compression pressure was increased in the first changing step b), the compression pressure is decreased in the second changing step b). The comparing step a) is preferably repeatedly performed, meaning that the comparing step is performed at determined intervals. Preferably, the comparing step a) is performed continuously. In this case the changing step b) is only performed if the deviation D determined in the comparing step a) is greater than a pre-set threshold ΔX.

The threshold ΔX may be a fixed value throughout the whole operation time of the engine or may be changed depending on findings gathered during operation of the engine, e.g. by an operator or by a control system or unit in the context of a self-learning environment.

Preferably the re-triggering step d) is only performed if the difference ΔEP determined in the determining step c) is greater than the pre-set or pre-settable threshold ΔX, otherwise the comparing step a) is re-triggered. Therefore, a loop of the changing step b), determining step c) and re-triggering step d) is performed until the difference ΔEP is within the pre-set or pre-settable threshold ΔX, meaning that the measured parameter(s) are close to the optimal value(s).

The re-triggering step d) is preferably only performed if the difference ΔEP determined in the determining step c) is greater than a pre-set or pre-settable second threshold ΔY.

The threshold ΔY may be a fixed value throughout the whole operation time of the engine or may be changed depending on findings gathered during operation of the engine, e.g. by an operator or by a control system or unit in the context of a self-learning environment.

Therefore, the method may be stopped if the difference ΔEP is within the pre-set or pre-settable second threshold ΔY.

The threshold ΔX is preferably equal to the second threshold ΔY. Preferably the compression pressure is changed by changing at least one actuator parameter selected from: exhaust valve closing or opening time, exhaust valve closing speed, injection time, injection pressure, injection sequence, wastegate ratio, wastegate threshold pressure, cylinder bypass air ratio, fuel rail pressure, servo oil rail pressure and turbocharger load pressure.

Preferably, if the reference values set the fuel consumption and the exhaust content parameter for different compression pressures into relationship, one or more actuators are operated in order to correct the compression pressure and achieve the compression pressure related to the lowest fuel consumption for the actual operating parameters of the engine.

Preferably the firing pressure of the engine is taken into account when performing the method and in particular when determining the deviation ΔEP.

The firing pressure is preferably determined as the maximum pressure just after the top dead centre (TDC).

In this case reference values preferably set the fuel consumption, preferably the Brake Specific Fuel Consumption (BSFC expressed in g/kWh) and the exhaust content parameter (expressed in ppm) for a given firing pressure and different compression pressures into relationship.

Preferably, the firing pressure is kept constant when performing the method. This is in particular achieved after the changing step b). Since the changing step b) may affect the firing pressure, a correcting step c) is performed after the changing step b) and before the determining step c) by changing a second actuator parameter selected from: exhaust valve closing or opening time, exhaust valve closing speed, injection time, injection pressure, injection sequence, wastegate ratio, wastegate threshold pressure, cylinder bypass air ratio, fuel rail pressure, servo oil rail pressure and turbocharger load pressure.

It goes without saying that the second actuator parameter is different from the actuator parameter used for changing the compression pressure.

E.g. the compression pressure may be reduced by delaying the exhaust valve closing, thus changing the exhaust valve closing time and/or closing speed, whereby the firing pressure of the engine is kept constant by advancing the injection time.

Preferably also the load of the engine is taken into account when performing the method and in particular when determining the deviation ΔEP.

Engine load may be determined by different methods, e.g. by a torque meter, by setting the rotational speed and a fuel consumption into relationship or using other parameter for extrapolating the load of the engine.

In this case the reference values preferably set the fuel consumption, preferably the Brake Specific Fuel Consumption (BSFC expressed in g/kWh) and the exhaust content parameter (expressed in ppm) for a given engine load and different compression pressures into relationship.

Preferably the load of the engine is kept essentially constant when performing the method. In marine applications, the load may fluctuate due to waves and/or pitching, wallowing and yawning of the boat itself, but remain constant according to the present invention. If the fluctuations are too pronounced, the engine load may be determined as a mean value in order to reduce the influence of the fluctuations.

More preferably both the firing pressure and the engine load are taken into consideration when performing the method and in particular determining the deviation ΔEP.

In this case the reference values preferably set the fuel consumption, preferably the Brake Specific Fuel Consumption (BSFC expressed in g/kWh) and the exhaust content parameter (expressed in ppm) for a given engine load, a given firing pressure and different compression pressures into relationship.

Preferably, at least one of air humidity, air temperature and air atmospheric pressure is taken into account when determining the deviation from the optimal value.

Preferably, in the determining step c) the measured parameter(s) are not used directly but first an average value over a recording period Δt (i.e. 100 combustion cycles of the engine) is determined in order to reduce the influence of fluctuations in the measured parameter(s). I.e. the values may vary depending on the phase of the combustion cycle, such that an average value would reduce the fluctuations. Alternatively, the measured parameter(s) may be collected at the same time in every cycle of the engine in order to keep the measured value(s) comparable. Preferably, before starting the method, the measured parameter(s) are also measured and an average value over a second recording period Δt2 is determined. The recording period Δt in the determining step c) and the second recording period Δt2 may be chosen to be equally long or differ from each other.

The problem is also solved by a system according to the claim. Preferred embodiments and advantages described above with respect to the method of the present invention are also accordingly applicable to the system of the present invention and vice-versa.

A system for controlling the compression pressure of a two-stroke turbocharged slow running diesel engine with a plurality of cylinder comprises at least one exhaust sensor for measuring at least one exhaust content parameter and a control unit in data connection with the exhaust sensor.

The exhaust content parameter may be one of Carbon Monoxide (CO) and/or Carbon Dioxide (CO₂) and/or Dioxygen (O₂) and/or Hydrocarbon (HC) and/or Total Hydrocarbon (THC) and/or Nitrogen Oxide (NO_{X}) and/or Sulphur Oxide (SO_{X}).

The control unit according to the present invention may be implemented in an existing control unit of the engine or may be a separated control unit, which is preferably in data connection with a main control unit of the engine. The latter is preferred when existing engines are retrofitted with the system according to the present invention.

The data connection is preferably achieved over a CAN BUS System or wireless data transmission.

The control unit is adapted to perform a method as cited above. Preferably, one exhaust sensor is arranged after an exhaust manifold, preferably after a turbocharger.

In this preferred embodiment, only one exhaust sensor is used, making the system less cost-intensive than e.g. a system with a plurality of exhaust sensors. The exhaust sensor is preferably arranged after a turbocharger in order to achieve a good mixing of the different exhaust streams originating from the different cylinders and in order to achieve an essentially constant value of the exhaust content parameter(s).

Another preferred embodiment comprises a plurality of exhaust sensors, one exhaust sensor for every cylinder of the engine. Every sensor is arranged at the exhaust manifold of the corresponding cylinder, thus measuring the exhaust content parameter for the corresponding cylinder only. The exhaust sensors are arranged preferably directly after or in the cylinder exhaust valve channel in order for the system (and for a corresponding method) to preferably allow changing the compression pressure separately for every cylinder.

In this case, when measuring the exaust content parameter(s), an average value over a recording period Δt (i.e. 100 combustion cycles of the engine) is determined in order to minimize fluctuations due to the change of the exhaust gas content during the engine cycle.

The invention will be now described according to preferred embodiments in connection with the drawings. It is shown in
- Fig. 1: a scheme of a preferred system according to the present invention; and
- Fig. 2: a characteristic curve.

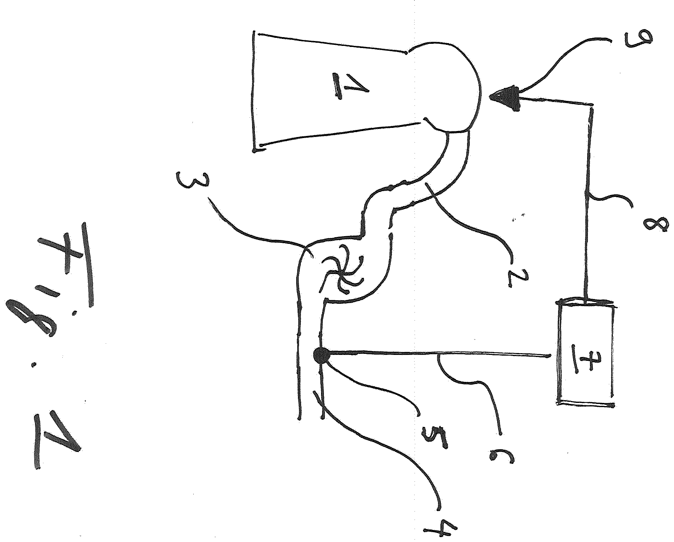

According to figure 1, an engine 1 is schematically shown. The exhaust gases of the engine 1 are collected by a manifold 2 and canalized to a turbocharger 3. After the turbocharger 3, the exhaust gases flow through an exhaust conduit 4 where an exhaust sensor 5 is arranged.

The exhaust sensor 5 is capable of measuring one or more exhaust content parameters such as Carbon Monoxide (CO), Carbon Dioxide (CO₂), Dioxygen (O₂), Hydrocarbon (HC), Total Hydrocarbon (THC), Nitrogen Oxide (NO_{X}) and Sulphur Oxide (SO_{X}).

The measured exhaust content parameter is then fed over a data link 6 to a control unit 7.

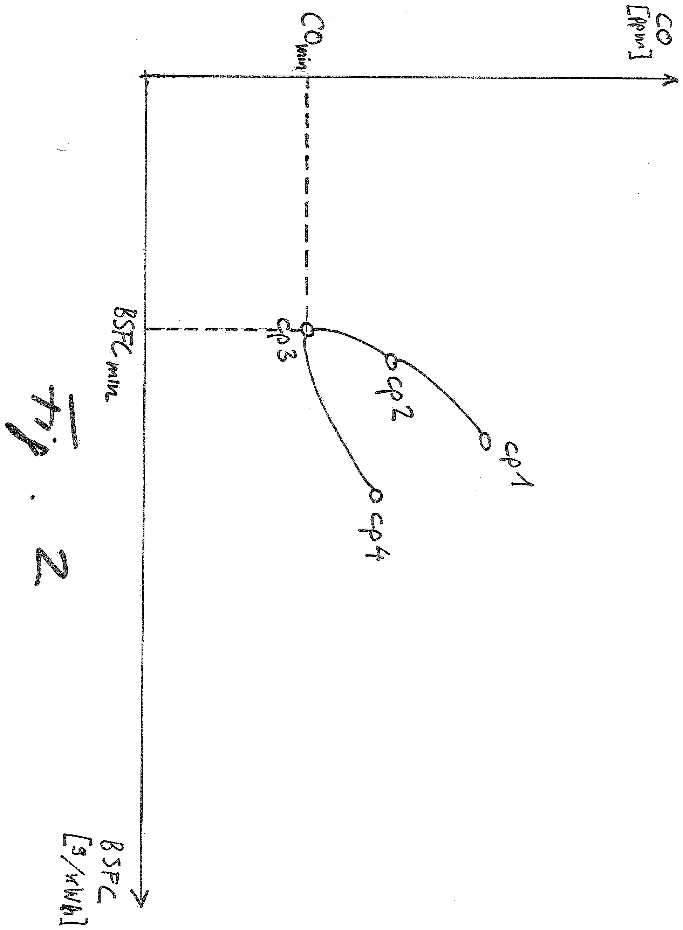

The control unit 7 then compares the measured exhaust content parameter with a characteristic curve of the exhaust parameter. Such a characteristic curve is shown schematically in figure 2. Accordingly, the brake specific fuel consumption (BSFC) is shown in relationship to the CO exhaust content. This characteristic curve is specific for a given firing pressure of the engine at a given load. Since the control unit 7 knows the firing pressure and the engine load, the right characteristic curve according to the actual engine parameters is chosen from a database and used when comparing the measured content parameter with the characteristic curve. As can be seen in figure 2, a minimum of the CO exhaust content COₘᵢₙ corresponds to a minimum of the BSFC (BSFCₘᵢₙ). This optimum occurs at a compression pressure cp3. Other compression pressures lower (cp1, cp2) and higher (cp4) than the optimal compression pressure cp3 lead to higher CO exhaust contents and therefore to higher BSFC values.

On the basis of the characteristic curve, the control unit 7 determines a difference and accordingly triggers over a data link 8 an actuator, schematically shown by the arrowhead 9.

The actuator 9 causes a change of the engine parameters and therefore a change in the exhaust gas composition. Since the exhaust content parameter is steadily measured by the exhaust sensor 5, the engine 1 can be operated at its optimum point, thus reducing the fuel consumption BSFC.

In the following preferred embodiments, the engine is operated at a essentially constant load and a given firing pressure and the Carbon Monoxide (CO) content is measured and recorded during operation of the engine.

In a preferred embodiment of the present invention, in a first step, an average of the CO-content over a recording period Δt is determined.

In a second step the compression pressure is increased respectively decreased by anticipating respectively delaying the opening of the exhaust valve. However, the firing pressure will be affected by such a change in the exhaust valve opening. Therefore, the firing pressure is adjusted back to its initial value in a third step by delaying or anticipating the injection time.

Compression pressure and firing pressure are kept constant over a period of time Δt during a fourth step, whereby an average value of the CO-content is determined.

If the CO-content after the change of the compression pressure is lower than before, then the second step is performed again with the same change of the compression pressure, meaning that if the compression pressure was increased, then the compression pressure is increased again.

If the CO-content after the change of the compression pressure is higher than before, then the second step is performed again with the opposite change of the compression pressure, meaning that if the compression pressure was increased, then the compression pressure is decreased.

In a second embodiment of the present invention, in a first step, an average of the CO-content over a recording period Δt is determined.

In a second step, the average CO-content is compared with a target optimal value and a difference D between the optimal value and the average CO-content is determined. If the difference D is within a given tolerance range ΔX, then the first step is performed again. Otherwise a third step is performed.

In the third step, the compression pressure is increased respectively decreased by anticipating respectively delaying the opening of the exhaust valve. However, the firing pressure will be affected by such a change in the exhaust valve opening. Therefore, the firing pressure is adjusted back to its initial value in a fourth step by delaying or anticipating the injection time.

Compression pressure and firing pressure are kept constant over a period of time Δt during a fifth step, whereby an average value of the CO-content is determined. Then the average value of the CO-content is compared with the optimal value and the difference D is determined.

If the difference D after the change of the compression pressure is lower than before and is within the tolerance range ΔX, then the compression pressure and firing pressure are kept constant and the process is set back to the first step.

If the difference D after the change of the compression pressure is lower than before but still outside the tolerance range ΔX, then the third step is performed again with the same change of the compression pressure, meaning that if the compression pressure was increased, then the compression pressure is increased again.

If the difference D after the change of the compression pressure is higher than before but still outside the tolerance range ΔX, then the third step is performed again with the opposite change of the compression pressure, meaning that if the compression pressure was increased, then the compression pressure is decreased.

## Claims

1. Method for optimizing the fuel consumption of a two-stroke, preferably turbocharged and/or slow running, diesel engine with a plurality of cylinders, wherein at least one exhaust content parameter selected from: Carbon Monoxide (CO), Carbon Dioxide (CO₂), Dioxygen (O₂), Hydrocarbon (HC), Total Hydrocarbon (THC), Nitrogen Oxide (NO_{X}), Sulphur Oxide (SO_{X}) is measured, preferably continuously, when performing the method, including the following steps:
a) comparing the measured parameter(s) with reference values, preferably of a characteristic curve,setting the fuel consumption and the exhaust content parameter(s) into relationship and determining a deviation (D) from an optimal value of the reference values;
b) changing the compression pressure;
c) determining a difference (ΔEP) between the determined deviation (D) before and after the changing step b);
d) re-triggering the changing step b) dependent on the difference (ΔEP) determined in the determining step c).

2. Method according to claim 1, wherein the comparing step a) is repeatedly, preferably continuously, performed, **characterized in that** the changing step b) is only performed if the deviation (D) determined in the comparing step a) is greater than a pre-set threshold (ΔX).

3. Method according to claim 2, **characterized in that** the re-triggering step d) is only performed if the difference (ΔEP) determined in the determining step c) is greater than the pre-set or pre-settable threshold (ΔX), otherwise the comparing step a) is re-triggered.

4. Method according to one of the claims 1 or 2, **characterized in that** the re-triggering step d) is only performed if the difference (ΔEP) determined in the determining step c) is greater than a pre-set or second threshold (ΔY).

5. Method according to one of the preceding claims, **characterized in that** the compression pressure is changed by changing at least one actuator parameter selected from: exhaust valve closing or opening time, exhaust valve closing speed, injection time, injection pressure, injection sequence, wastegate ratio, wastegate threshold pressure, cylinder by-pass air ratio, fuel rail pressure, servo oil rail pressure, turbocharger load pressure.

6. Method according to one of the preceding claims, **characterized in that** the firing pressure of the engine is taken into account when performing the method and in particular when determining the deviation (ΔEP).

7. Method according to claim 6, **characterized in that** the firing pressure is kept essentially constant when performing the method and is in particular corrected in a correcting step e) after the changing step b) by changing a second actuator parameter selected from: exhaust valve closing or opening time, exhaust valve closing speed, injection time, injection pressure, injection sequence, wastegate ratio, wastegate threshold pressure, cylinder bypass air ratio, fuel rail pressure, servo oil rail pressure, turbocharger load pressure.

8. Method according to one of the preceding claims, **characterized in that** the load of the engine is taken into account when performing the method and in particular when determining the deviation (ΔEP).

9. Method according to claim 8, **characterized in that** the load of the engine is kept essentially constant when performing the method.

10. Method according to one of the preceding claims, **characterized in that** the at least one of air humidity, air temperature and air atmospheric pressure is taken into account when determining the deviation from the optimal value.

11. Method according to one of the preceding claims, **characterized in that** in the determining step c) and, if performed, in the comparing step a) the measured parameter(s) are an average value over a recording period (Δt).

12. System for optimizing the fuel consumption of a two-stroke, preferably turbocharged and/or slow running, diesel engine with a plurality of cylinder comprising:
- at least one exhaust sensor for measuring at least one exhaust content parameter selected from: Carbon Monoxide (CO), Carbon Dioxide (CO₂), Dioxygen (O₂), Hydrocarbon (HC), Total Hydrocarbon (THC), Nitrogen Oxide (NO_{X}), Sulphur Oxide (SO_{X}); and
- a control unit in data connection with the exhaust sensor;
**characterized in that** the control unit is adapted to perform a method according to one of the preceding claims.

13. System according to claim 12, **characterized in that** one exhaust sensor is arranged after an exhaust manifold, preferably after a turbocharger.

14. System according to claim 12 or 13, **characterized in that** for every cylinder of the diesel engine, an exhaust sensor is arranged at the exhaust manifold, preferably directly after the cylinder exhaust valve channel.

## Patentansprüche

1. Verfahren zur Optimierung des Kraftstoffverbrauchs eines Zweitakt-Dieselmotors mit einer Vielzahl von Zylindern, vorzugsweise mit Turboaufladung und/oder Langsamlauf, wobei mindestens ein Abgasgehaltsparameter, ausgewählt aus: Kohlenmonoxid (CO), Kohlendioxid (CO2), Sauerstoff (O2), Kohlenwasserstoff (HC), Gesamtkohlenwasserstoff (THC), Stickstoffoxid (NOX), Schwefeloxid (SOX), bei der Durchführung des Verfahrens, vorzugsweise kontinuierlich, gemessen wird, mit den folgenden Schritten:
a) Vergleichen der gemessenen Parameter mit Referenzwerten, vorzugsweise einer Kennlinie, Herstellen einer Beziehung zwischen dem Kraftstoffverbrauch und den Abgasgehaltsparametern und Bestimmen einer Abweichung (D) von einem optimalen Wert der Referenzwerte;
b) Ändern des Verdichtungsdrucks;
c) Bestimmen einer Differenz (ΔEP) zwischen der bestimmten Abweichung (D) vor und nach dem Änderungsschritt b);
d) erneutes Auslösen des Änderungsschritts b) in Abhängigkeit von der im Bestimmungsschritt c) ermittelten Differenz (ΔEP) .

2. Verfahren nach Anspruch 1, wobei der Vergleichsschritt a) wiederholt, vorzugsweise kontinuierlich, durchgeführt wird, **dadurch gekennzeichnet, dass** der Änderungsschritt b) nur dann durchgeführt wird, wenn die im Vergleichsschritt a) bestimmte Abweichung (D) größer als ein vorgegebener Schwellenwert ist (ΔX).

3. Verfahren nach Anspruch 2, **dadurch gekennzeichnet, dass** der Nachtriggerschritt d) nur dann durchgeführt wird, wenn die im Bestimmungsschritt c) ermittelte Differenz (ΔEP) größer ist als der voreingestellte oder voreinstellbare Schwellenwert (ΔX), andernfalls wird der Vergleichsschritt a) erneut ausgelöst.

4. Verfahren nach einem der Ansprüche 1 oder 2, **dadurch gekennzeichnet, dass** der Nachtriggerschritt d) nur dann durchgeführt wird, wenn die im Bestimmungsschritt c) bestimmte Differenz (ΔEP) größer als ein voreingestellter oder zweiter Schwellenwert (ΔY) ist.

5. Verfahren nach einem der vorhergehenden Ansprüche, **dadurch gekennzeichnet, dass** der Verdichtungsdruck durch Ändern mindestens eines Stellgliedparameters geändert wird, der ausgewählt ist aus: Auslassventilschließ- oder -öffnungszeit, Auslassventilschließgeschwindigkeit, Einspritzzeit, Einspritzdruck, Einspritzsequenz, Druckventil-Verhältnis, Druckventil-Schwelldruck, Zylinder-Bypass-Luftverhältnis, Kraftstoffschienen-Druck, Servoöl-Schienen-Druck, Turbolader-Lastdruck.

6. Verfahren nach einem der vorstehenden Ansprüche, **dadurch gekennzeichnet, dass** der Zünddruck des Motors bei der Durchführung des Verfahrens und insbesondere beim Bestimmen der Abweichung (ΔEP) berücksichtigt wird.

7. Verfahren nach Anspruch 6, **dadurch gekennzeichnet, dass** der Zünddruck bei der Durchführung des Verfahrens im Wesentlichen konstant gehalten und insbesondere in einem Korrekturschritt e) nach dem Änderungsschritt b) durch Ändern eines zweiten Stellgliedparameters, ausgewählt aus: Auslassventilschließ- oder -öffnungszeit, Auslassventilschließgeschwindigkeit, Einspritzzeit, Einspritzdruck, Einspritzsequenz, Druckventil-Verhältnis, Druckventil-Schwelldruck, Zylinder-Bypass-Luftverhältnis, Kraftstoffschienen-Druck, Servoöl-Schienen-Druck, Turbolader-Ladedruck, korrigiert wird.

8. Verfahren nach einem der vorstehenden Ansprüche, **dadurch gekennzeichnet, dass** die Last des Motors bei der Durchführung des Verfahrens und insbesondere beim Bestimmen der Abweichung (ΔEP) berücksichtigt wird.

9. Verfahren nach Anspruch 8, **dadurch gekennzeichnet, dass** die Last des Motors während der Durchführung des Verfahrens im Wesentlichen konstant gehalten wird.

10. Verfahren nach einem der vorstehenden Ansprüche, **dadurch gekennzeichnet, dass** das zumindest Luftfeuchtigkeit, Lufttemperatur und/oder Luftdruck bei der Bestimmung der Abweichung vom optimalen Wert berücksichtigt wird.

11. Verfahren nach einem der vorhergehenden Ansprüche, **dadurch gekennzeichnet, dass** in dem Bestimmungsschritt c) und, falls durchgeführt, in dem Vergleichsschritt a) die gemessenen Parameter ein Mittelwert über einen Aufzeichnungszeitraum (Δt) sind.

12. System zur Optimierung des Kraftstoffverbrauchs eines Zweitakt-Dieselmotors mit einer Vielzahl von Zylindern, vorzugsweise mit Turboaufladung und/oder Langsamlauf, umfassend:
- mindestens einen Abgassensor zum Messen mindestens eines Abgasgehaltsparameters, ausgewählt aus: Kohlenmonoxid (CO), Kohlendioxid (CO2), Sauerstoff (O2), Kohlenwasserstoff (HC), Gesamtkohlenwasserstoff (THC), Stickstoffoxid (NOX), Schwefeloxid (SOX); und
- eine Steuereinheit in Datenverbindung mit dem Abgassensor;
**dadurch gekennzeichnet, dass** die Steuereinheit angepasst ist, um ein Verfahren nach einem der vorhergehenden Ansprüche durchzuführen.

13. System nach Anspruch 12, **dadurch gekennzeichnet, dass** ein Abgassensor nach einem Abgassammler, vorzugsweise nach einem Turbolader, angeordnet ist.

14. System nach Anspruch 12 oder 13, **dadurch gekennzeichnet, dass** für jeden Zylinder des Dieselmotors ein Abgassensor am Abgassammler angeordnet ist, vorzugsweise direkt nach dem Zylinderauslassventilkanal.

## Revendications

1. Procédé pour optimiser la consommation de carburant d'un moteur diesel à deux temps, de préférence turbocompressé et/ou fonctionnant lentement, avec plusieurs cylindres, dans lequel au moins un paramètre de teneur en gaz d'échappement choisi parmi : monoxyde de carbone (CO), dioxyde de carbone (CO2), dioxygène (O2), hydrocarbures (HC), hydrocarbures totaux (THC), dioxyde d'azote (NOX), oxyde de soufre (SOX) est mesuré, de préférence continuellement, en effectuant le procédé, comprenant les étapes suivantes :
a) comparaison des paramètres mesurés avec des valeurs de référence, de préférence d'une courbe caractéristique, mise en relation de la consommation de carburant et de la teneur en gaz d'échappement, et détermination d'un écart (D) à une valeur optimale des valeurs de référence ;
b) modification de la pression de compression ;
c) déterminer une différence (ΔEP) entre l'écart déterminé (D) avant et après l'étape de modification b) ;
d) redéclenchement de l'étape de modification b) en fonction de la différence (ΔEP) déterminée à l'étape de détermination c) .

2. Procédé selon la revendication 1, dans lequel l'étape de comparaison a) est exécutée de manière répétée, de préférence de manière continue, **caractérisé en ce que** l'étape de changement b) n'est exécutée que si l'écart (D) déterminé dans l'étape de comparaison a) est supérieur à un seuil prédéterminé (ΔX).

3. Procédé selon la revendication 2, **caractérisé en ce que** l'étape de redéclenchement d) n'est exécutée que si la différence (ΔEP) déterminée dans l'étape de détermination c) est supérieure au seuil prédéfini ou prédéfini (ΔX), sinon l'étape de comparaison a) est redéclenchée.

4. Method according to one of the claims 1 or 2, **characterized in that** the re-triggering step d) is only performed if the difference (ΔEP) determined in the determining step c) is greater than a pre-set or second threshold (ΔY).

5. Procédé selon l'une des revendications précédentes, **caractérisé en ce que** la pression de compression est modifiée en modifiant au moins un paramètre d'actionneur choisi parmi :
le temps de fermeture ou d'ouverture de la soupape d'échappement, la vitesse de fermeture de la soupape d'échappement, le temps d'injection, la pression d'injection, la séquence d'injection, rapport de pression des soupapes, pression de seuil de la soupape de décharge, rapport d'air du by-pass du cylindre, pression de la rail carburant, pression du rail d'huile du servomoteur, pression de charge du turbocompresseur.

6. Procédé selon l'une des revendications précédentes, **caractérisé en ce que** la pression d'allumage du moteur est prise en compte lors de l'exécution du procédé et en particulier lors de la détermination de l'écart (ΔEP).

7. Procédé selon la revendication 6, **caractérisé en ce que** la pression d'allumage est maintenue essentiellement constante lors de l'exécution du procédé et est en particulier corrigée dans une étape de correction e) après l'étape de changement b) en modifiant un second paramètre de commande choisi parmi: le temps de fermeture ou d'ouverture de la soupape d'échappement, la vitesse de fermeture de la soupape d'échappement, le temps d'injection, la pression d'injection, la séquence d'injection, rapport de pression des soupapes, pression de seuil de la soupape de décharge, rapport d'air du by-pass du cylindre, pression de la rail carburant, pression du rail d'huile du servomoteur, pression de charge du turbocompresseur.

8. Procédé selon l'une des revendications précédentes, **caractérisé en ce que** la charge du moteur est prise en compte lors de l'exécution du procédé et en particulier lors de la détermination de l'écart (ΔEP).

9. Procédé selon la revendication 8, **caractérisé en ce que** la charge du moteur est maintenue essentiellement constante lors de l'exécution du procédé.

10. Procédé selon l'une des revendications précédentes, **caractérisé en ce que** l'au moins l'humidité de l'air, la température de l'air et la pression atmosphérique de l'air sont prises en compte pour déterminer l'écart à la valeur optimale.

11. Procédé selon l'une des revendications précédentes, **caractérisé en ce que** dans l'étape de détermination c) et, le cas échéant, dans l'étape de comparaison a), la ou les grandeurs de mesure sont une valeur moyenne sur une période d'enregistrement (Δt).

12. Système d'optimisation de la consommation de carburant d'un moteur diesel à deux temps, de préférence turbocompressé et/ou fonctionnant lentement, avec une pluralité de cylindres comprenant :
- au moins un senseur d'échappement pour mesurer au moins un paramètre de teneur en gaz d'échappement choisi parmi : Monoxyde de carbone (CO), dioxyde de carbone (CO2), oxygène (O2), hydrocarbures (HC), hydrocarbures totaux (THC), oxyde d'azote (NOX), dioxyde de soufre (SOX) ; et
- une unité de commande en liaison de données avec le capteur d'échappement ;
**caractérisé en ce que** l'unité de commande est adaptée pour réaliser un procédé selon l'une des revendications précédentes.

13. Système selon la revendication 12, **caractérisé en ce qu'**un senseur d'échappement est disposé après un collecteur d'échappement, de préférence après un turbocompresseur.

14. Système selon la revendication 12 ou 13, **caractérisé en ce que** pour chaque cylindre du moteur diesel, un senseur d'échappement est disposé au collecteur d'échappement, de préférence directement après le canal de la soupape d'échappement du cylindre.
